# EUROPEAN PATENT SPECIFICATION

(11) **EP 1 475 408 B1**
(45) Date of publication and mention of the grant of the patent: **06.04.2011**
(21) Application number: 03705233.9
(22) Date of filing: 17.02.2003
(51) Int. Cl.: C08L 7/00, C08L 21/00, C08K 3/04, C08K 5/092, C08K 5/13, C08K 5/24, C08K 5/3447, B60C 1/00

(54) **RUBBER COMPOSITION AND PNEUMATIC TIRE MADE THEREFROM**
KAUTSCHUKZUSAMMENSETZUNG UND DARAUS HERGESTELLTER PNEUMATISCHER REIFEN
COMPOSITION DE CAOUTCHOUC ET PNEUMATIQUE PRODUIT A PARTIR DE LADITE COMPOSITION

(30) Priority: 15.02.2002 JP 2002038585; 15.02.2002 JP 2002038586
(43) Date of publication of application: 10.11.2004
(73) Proprietor: Bridgestone Corporation, Tokyo 104-8340 (JP); OTSUKA CHEMICAL COMPANY, LIMITED, Osaka-shi, Osaka 540-0021 (JP)
(72) Inventor: NOHARA, Daisuke, c/o Bridgestone Corporation, Kodaira-shi, Tokyo 187-8531 (JP); OKA, Akinori, c/o Otsuka Chemical Co. Ltd., Tokushima-shi, Tokushima 771-0193 (JP); SONOKI, Ken, c/o Otsuka Chemical Co. Ltd., Tokushima-shi, Tokushima 771-0193 (JP); KIJIMA, Syuichi, c/o Otsuka Chemical Co. Ltd., Tokushima-shi, Tokushima 771-0193 (JP); IGARASHI, Jun, c/o Otsuka Chemical Co. Ltd., Tokushima-shi, Tokushima 771-0193 (JP)
(74) Representative: Whalley, Kevin
(86) International application number: PCT/JP2003/001641
(87) International publication number: WO 2003/068857

(56) References cited:
- EP-A- 0 251 760
- EP-A- 0 251 760
- EP-A- 0 909 788
- JP-A- 10 060 166
- JP-A- 10 139 934
- JP-A- 55 108 430
- JP-A- 2001 072 807
- JP-A- 2001 192 503
- JP-A- 2002 012 706
- JP-A- 2002 053 706
- JP-A- 2002 097 312
- DATABASE WPI Section Ch, Week 200176 Thomson Scientific, London, GB; Class A12, AN 2001-658660 XP002489119 & JP 2001 192503 A (BRIDGESTONE CORP.) 17 July 2001 (2001-07-17)
- DATABASE WPI Section Ch, Week 199737 Thomson Scientific, London, GB; Class A12, AN 1997-399674 XP002489120 & JP 09 176387 A (BRIDGESTONE CORP.) 8 July 1997 (1997-07-08)
- DATABASE WPI Section Ch, Week 199831 Thomson Scientific, London, GB; Class A18, AN 1998-357611 XP002489121 & JP 10 139934 A (BRIDGESTONE CORP.) 26 May 1998 (1998-05-26)
- DATABASE WPI Section Ch, Week 199747 Thomson Scientific, London, GB; Class A12, AN 1997-508959 XP002489131 & JP 09 241432 A (BRIDGESTONE CORP.) 16 September 1997 (1997-09-16)

## Description

### BACKGROUND OF THE INVENTION

The present invention relates to a rubber composition and a pneumatic tire using the same. More specifically, the present invention relates to a rubber composition which is improved in a gripping performance without damaging a productivity and a pneumatic tire which is prepared by using the above rubber composition and which is improved in a gripping performance in running at a high speed.

### RELATED ART

In recent years, a rise in the performance of automobiles, paving of roads and an advance in highway networks strengthen requirement to pneumatic tires which are provided with a high moving performance. The higher characteristic described above makes it possible to run precisely and safely at a higher speed. Particularly, a gripping performance represented by an accelerating performance and a braking performance is an important required characteristic.

A method in which a styrene-butadiene copolymer rubber having a high styrene content which is rubber having a high glass transition temperature is used for a rubber composition for a tire tread has so far been known as a method for obtaining a high gripping performance. According to this method, however, the gripping performance in the vicinity of a room temperature is enhanced, but involved therein is the inconvenience that a rise in the rubber temperature caused by running reduces the tan δ value to lower the gripping performance.

Disclosed is a technique in which a copolymer rubber obtained by copolymerizing a monomer such as 1,3-butadiene, styrene or isoprene with a (meth)acrylate compound having a diphenyl phosphate group such as diphenyl-2-methacryloyloxyethyl phosphate or diphenyl-2-acryloyloxyethyl phosphate is used in order to improve a reduction in the gripping performance caused by a rise in the temperature (Japanese Patent Application Laid-Open No. 187011/1984). In this case, however, there has been involved therein the inconvenience that not only it can not be applied to a natural rubber but also properties which are originally endowed to a polymer, for example, a styrene-butadiene copolymer rubber and a polybutadiene rubber are damaged depending on the production conditions.

On the other hand, known is a method in which a blending system filled highly with a process oil and carbon black is used to thereby elevate a tan δ value of a rubber composition. According to the above method, the gripping performance is enhanced, but there has been the problem that high filling thereof is limited because the fracture characteristic and the abrasion resistance are notably reduced if the filling amount is too much, so that the desired high gripping performance is less liable to be obtained.

Further, disclosed is a technique in which a rubber component is blended with a specific imidazole compound and/or imidazoline compound and a specific protonic acid derivative in a prescribed proportion to thereby elevate the tan δ value in a high temperature area and in which the above rubber composition is used for a tread of a tire to improve a gripping performance (Japanese Patent Application Laid-Open No. 139931/1988). In the above technique, however, a productivity is unsatisfactory, and it involves a problem in terms of practical use.

### DISCLOSURE OF THE INVENTION

An object of the present invention is to solve such problems as involved in the conventional techniques and provide a rubber composition which exhibits an excellent gripping performance without damaging a productivity and a pneumatic tire which is prepared by using the above rubber composition and which is improved in a gripping performance in running at a high speed.

Intensive researches repeated by the present inventors in order to achieve the object described above have resulted in finding that the object can be achieved by a composition prepared by blending a rubber component with a benzimidazole derivative having a specific structure and/or a hydrazide derivative and a protonic acid in a specific proportion. The present invention has been completed based on such knowledge.

That is, the present invention provides a rubber composition prepared by blending
(A) 100 parts by weight of a rubber component comprising a natural rubber and/or a synthetic rubber,
(B) 0.1 to 50 parts by weight of a nitrogen-containing compound comprising at least one selected from a benzimidazole derivative represented by Formula (I): 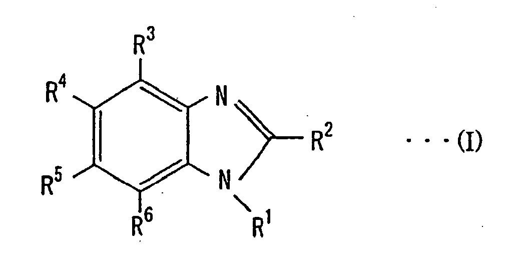 (wherein R¹ is phenyl ; and R² to R⁶ each represent independently a hydrogen atom, a halogen atom, a hydrocarbon group having to 18 carbon atoms, a heterocyclic group, a hydroxyl group, an alkoxyl group, a substituted or non-substituted amino group, an amide group, a nitro group, a substituted or non-substituted mercapto group, a sulfonyl group or an acyl group) and a hydrazide derivative represented by Formula (II): 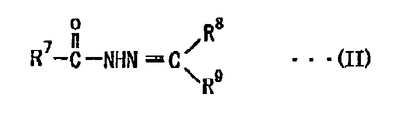 (wherein R⁷ represents a hydrogen atom, a hydrocarbon group having 1 to 18 carbon atoms or an amino group; and R⁸ and R⁹ each represent independently a hydrogen atom, a hydrocarbon group having 1 to 18 carbon atoms or a heterocyclic group, and R⁸ and R⁹ may be the same as or different from each other and may be combined with each other to form a ring structure) and
(C) 0.1 to 50 parts by weight of a protonic acid.

Further, the present invention provides as well a pneumatic tire characterized by using the rubber composition described above for a rubber member, particularly a tread.

### EMBODIMENT OF THE INVENTION

(A) A natural rubber and/or a synthetic rubber are used as the rubber component in the rubber composition of the present invention. In this respect, the synthetic rubber is preferably a diene base rubber and includes, for example, a styrene-butadiene copolymer rubber (SBR), a polybutadiene rubber (BR), a polyisoprene rubber (IR) and an acrylonitrile butadiene copolymer rubber (NBR), and in addition thereto, it includes a butyl rubber (IIR) and an ethylene-propylene copolymer rubber. Further, rubbers having a branched structure which are obtained by using, for example, a multifunctional modifying agent such as tin tetrachloride can be used as well. The above natural rubbers and synthetic rubbers may be used alone or in combination of two or more kinds thereof.

In the rubber composition of the present invention, used is (B) a nitrogen-containing compound comprising at least one selected from a benzimidazole derivative represented by Formula (I): 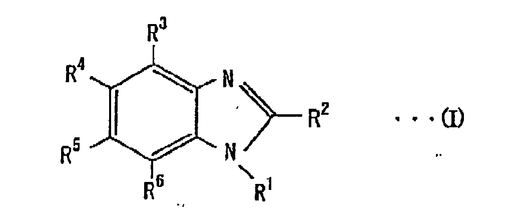 (wherein R¹ is phenyl ; and R² to R⁶ each represent independently a hydrogen atom, a halogen atom, a hydrocarbon group having to 18 carbon atoms, a heterocyclic group, a hydroxyl group, an alkoxyl group, a substituted or non-substituted amino group, an amide group, a nitro group, a substituted or non-substituted mercapto group, a sulfonyl group or an acyl group) and a hydrazide derivative represented by Formula (II): 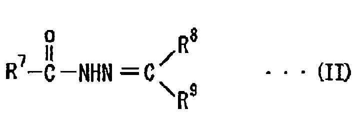 (wherein R⁷ represents a hydrogen atom, a hydrocarbon group having 1 to 18 carbon atoms or an amino group; and R⁸ and R⁹ each represent independently a hydrogen atom, a hydrocarbon group having 1 to 18 carbon atoms or a heterocyclic group, and R⁶ and R⁹ may be the same as or different from each other and may be combined with each other to form a ring structure).

The benzimidazole derivative represented by Formula I may be used alone or in combination of two or more kinds thereof. The benzimidazole derivative represented by Formula I may be used in combination with at least one other benzimidazole derivative represented by Formula I': 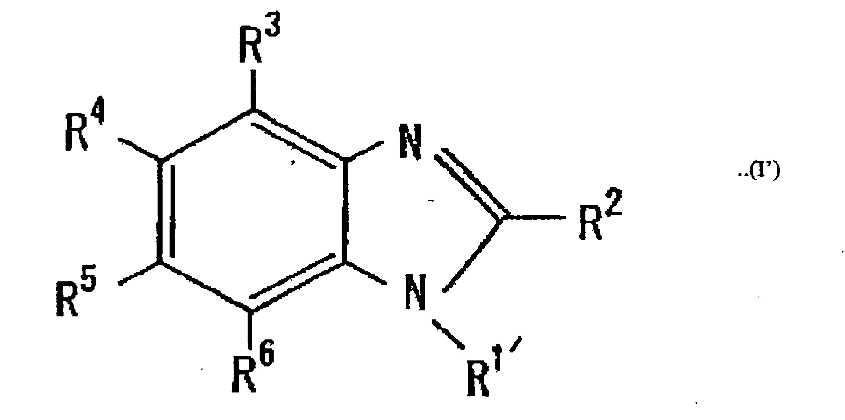 wherein R¹ represents a group which is not phenyl and is a hydrocarbon group having 1 to 18 carbon atoms, a heterocyclic group, an acyl group, an amide group, a sulfonyl group, a hydroxyl group or a nitro group; and R² to R⁶ are as defined above for Formula I.

In Formula (I') and (I) described above, the hydrocarbon group having 1 to 18 carbon atoms among the groups represented by R¹' and the hydrocarbon group having 1 to 18 carbon atoms among the groups represented by R² to R⁶ can include an alkyl group having 1 to 18 carbon atoms, an alkenyl group having 2 to 18 carbon atoms, an alkynyl group having 2 to 18 carbon atoms, an aryl group having 6 to 18 carbon atoms and an aralkyl group having 7 to 18 carbon atoms. In this respect, the alkyl group having 1 to 18 carbon atoms, the alkenyl group having 2 to 18 carbon atoms and the alkynyl group having 2 to 18 carbon atoms each described above may be any of linear, branched and cyclic and may be substituted with at least one substituent containing at least one atom selected from a sulfur atom, a nitrogen atom and an oxygen atom. The examples of the alkyl group, the alkenyl group and the alkynyl group each described above can include methyl, ethyl, n-propyl, isopropyl, various butyls, various pentyls, various hexyls, various octyls, various decyls, cyclopentyl, cyclohexyl, vinyl, allyl, propenyl, ethynyl and propynyl.

In the aryl group having 6 to 18 carbon atoms and the aralkyl group having 7 to 18 carbon atoms each described above, at least one substituent containing at least one atom selected from a carbon atom, a sulfur atom, a nitrogen atom and an oxygen atom may be introduced on a ring thereof. The examples of the aryl group and the aralkyl group each described above can include phenyl, tolyl, xylyl, naphthyl, anthryl, trityl, benzyl, phenethyl and naphthylmethyl.

Further, in the heterocyclic group among the groups represented by R¹' and the heterocyclic group among the groups represented by R² to R⁶, at least one substituent containing at least one atom selected from a carbon atom, a sulfur atom, a nitrogen atom and an oxygen atom may be introduced on a ring thereof. A hetero atom constituting the ring in the above heterocyclic group includes at least one selected from a sulfur atom, a nitrogen atom and oxygen, and the number of the ring is in a degree of 3 to 10. The examples of the above heterocyclic group can include furyl, thienyl, pyrrolyl, oxazolyl, thiazyl, imidazolyl, pyrazolyl, pyridyl, pyrimidinyl, pyrrolidinyl, piperidinyl, piperazinyl, morpholinyl, quinolyl, quinoxalinyl, indolyl, benzofuranyl and benzothiophenyl.

The acyl group among the groups represented by R¹' and the acyl group among the groups represented by R² to R⁶ are preferably the groups having 2 to 18 carbon atoms, and they include, for example, acetyl, propionyl, and benzoyl. The amide group include, for example, formamide and acetamide, and the sulfonyl group include, for example, methanesulfonyl and ethanesulfonyl.

The halogen atom among the groups represented by R² to R⁶ includes fluorine, chlorine, bromine and iodine, and the alkoxyl group includes the groups having 1 to 18 carbon atoms, for example, methoxy, ethoxy, n-propoxy, isopropoxy, various butoxy, various pentoxy and various hexoxy. Further, substituents for the substituted amino group and the substituted mercapto group among the groups represented by R² to R⁶ are preferably an alkyl group having 1 to 18 carbon atoms, and they include, for example, methyl, ethyl, n-propyl, isopropyl, various butyls, various pentyls and various hexyls. In the case of the substituted amino group, it may be either monosubstituted or disubstituted.

Capable of being preferably given as the example of the benzimidazole derivative represented by Formula (I) are 1-phenylbenzimidazole, 1-phenyl-2-methylbenzimidazole, and 1-phenyl-2-ethylbenzimidazole.

Next, in Formula (II) described above, the hydrocarbon group having 1 to 18 carbon atoms among the groups represented by R⁷ and the hydrocarbon group having 1 to 18 carbon atoms among the groups represented by R⁸ and R⁹ can include an alkyl group having 1 to 18 carbon atoms, an alkenyl group having 2 to 18 carbon atoms, an aryl group having 6 to 18 carbon atoms and an aralkyl group having 7 to 18 carbon atoms. In this respect, the alkyl group having 1 to 18 carbon atoms and the alkenyl group having 2 to 18 carbon atoms each described above may be any of linear, branched and cyclic. The examples of the alkyl group and the alkenyl group each described above can include methyl, ethyl, n-propyl, isopropyl, various butyls, various pentyls, various hexyls, various octyls, various decyls, various dodecyls, various tetradecyls, various hexadecyls, various octadecyls, cyclopentyl, cyclohexyl, vinyl, allyl, propenyl and oleyl.

In the aryl group having 6 to 18 carbon atoms and the aralkyl group having 7 to 18 carbon atoms each described above, at least one substituent containing at least one atom selected from a carbon atom, a sulfur atom, a nitrogen atom and an oxygen atom may be introduced on a ring thereof, and they ma be substituted with a hydroxyl group in an optional position. The examples of the aryl group and the aralkyl group each described above can include phenyl, tolyl, xylyl, naphthyl, anthryl, benzyl, phenethyl, naphthylmethyl, hydroxyphenyl and hydroxynaphthyl.

Further, in the heterocyclic group among the groups represented by R⁸ and R⁹, at least one substituent containing at least one atom selected from a carbon atom, a sulfur atom, a nitrogen atom and an oxygen atom may be introduced on a ring thereof. A hetero atom constituting the ring in the above heterocyclic group includes at least one selected from a sulfur atom, a nitrogen atom and oxygen, and the number of the ring is in a degree of 3 to 10. The examples of the above heterocyclic group can include furyl, thienyl, pyrrolyl, oxazolyl, thiazyl, imidazolyl, pyrazolyl, pyridyl, pyrimidinyl, pyrrolidinyl, piperidinyl, piperazinyl, morpholinyl, quinolyl, quinoxalinyl, indolyl, benzofuranyl and benzothiophenyl.

R⁸ and R⁹ may be the same as or different from each other and may be combined with each other to form a ring structure, for example, cyclohexylidene.

The hydrazide derivative represented by Formula (II) described above includes, for example, N'-(1-methylethylidene)benzoic acid hydrazide, N'-(1-methylpropylidene)benzoic acid hydrazide, N'-(1,3-dimethylbutylidene)benzoic acid hydrazide, N'-(benzylidene)benzoic acid hydrazide, N'-(4-dimethylaminophenylmethylidene)benzoic acid hydrazide, N'-(4-methoxyphenylmethylidene)benzoic acid hydrazide, N'-(4-hydroxyphenylmethylidene)benzoic acid hydrazide, N'-(1-phenylethylidene)benzoic acid hydrazide, N'-(1-phenylbenzylidene)benzoic acid hydrazide, N'-(1-(2,4-dihydroxyphenyl)benzylidene)benzoic acid hydrazide, N'-(2-furylmethylidene)benzoic acid hydrazide, N'-(1-methylethylidene)-1-naphthalenecarboxylic acid hydrazide, N'-(1-methylpropylidene)-1-naphthalenecarboxylic acid hydrazide, N'-(1,3-dimethylbutylidene)-1-naphthalenecarboxylic acid hydrazide, N'-(benzylidene)-1-naphthalenecarboxylic acid hydrazide, N'-(4-dimethylaminophenylmethylidene)-1-naphthalenecarboxylic acid hydrazide, N'-(4-methoxyphenylmethylidene)-1-naphthalenecarboxylic acid hydrazide, N'-(4-hydroxyphenylmethylidene)-1-naphthalenecarboxylic acid hydrazide, N'-(1-phenylethylidene)-1-naphthalenecarboxylic acid hydrazide, N'-(1-phenylbenzylidene)-1-naphthalenecarboxylic acid hydrazide, N'-(1-(2,4-dihydroxyphenyl)benzylidene)-1-naphthalenecarboxylic acid hydrazide, N'-(2-furylmethylidene)-1-naphthalenecarboxylic acid hydrazide, N'-(1-methylethylidene)-2-naphthalenecarboxylic acid hydrazide, N'-(1-methylpropylidene)-2-naphthalenecarboxylic acid hydrazide, N'-(1,3-dimethylbutylidene)-2-naphthalenecarboxylic acid hydrazide, N'-(benzylidene)-2-naphthalenecarboxylic acid hydrazide,
N'-(4-dimethylaminophenylmethylidene)-2-naphthalenecarboxylic acid hydrazide, N'-(4-methoxyphenylmethylidene)-2-naphthalenecarboxylic acid hydrazide, N'-(4-hydroxyphenylmethylidene)-2-naphthalenecarboxylic acid hydrazide, N'-(1-phenylethylidene)-2-naphthalenecarboxylic acid hydrazide, N'-(1-phenylbenzylidene)-2-naphthalenecarboxylic acid hydrazide, N'-(1-(2,4-dihydroxyphenyl)benzylidene)-2-naphthalenecarboxylic acid hydrazide, N'-(2-furylmethylidene)-2-naphthalenecarboxylic acid hydrazide, N'-(1-methylethylidene)propionic acid hydrazide, N'-(1-methylpropylidene)propionic acid hydrazide, N'-(1,3-dimethylbutylidene)propionic acid hydrazide, N'-(benzylidene)propionic acid hydrazide, N'-(4-dimethylaminophenylmethylidene)propionic acid hydrazide, N'-(4-methoxyphenylmethylidene)propionic acid hydrazide, N'-(4-hydroxyphenylmethylidene)propionic acid hydrazide, N'-(1-phenylethylidene)propionic acid hydrazide, N'-(1-phenylbenzylidene)propionic acid hydrazide, N'-(1-(2,4-dihydroxyphenyl)benzylidene)propionic acid hydrazide, N'-(2-furylmethylidene)propionic acid hydrazide, N'-(1-methylethylidene)-2-methylpropionic acid hydrazide, N'-(1-methylpropylidene)-2-methylpropionic acid hydrazide, N'-(1,3-dimethylbutylidene)-2-methylpropionic acid hydrazide, N'-(benzylidene)-2-methylpropionic acid hydrazide, N'-(4-dimethylaminophenylmethylidene)-2-methylpropionic acid hydrazide, N'-(4-methoxyphenylmethylidene)-2-methylpropionic acid hydrazide, N'-(4-hydroxyphenylmethylidene)-2-methylpropionic acid hydrazide, N'-(1-phenylethylidene)-2-methylpropionic acid hydrazide,
N'-(1-phenylbenzylidene)-2-methylpropionic acid hydrazide, N'-(1-(2,4-dihydroxyphenyl)benzylidene)-2-methylpropionic acid hydrazide, N'-(2-furylmethylidene)-2-methylpropionic acid hydrazide, N'-(1-methylethylidene)-2,2'-dimethylpropionic acid hydrazide, N'-(1-methylpropylidene)-2,2'-dimethylpropionic acid hydrazide, N'-(1,3-dimethylbutylidene)-2,2'-dimethylpropionic acid hydrazide, N'-(benzylidene)-2,2'-dimethylpropionic acid hydrazide, N'-(4-dimethylaminophenylmethylidene)-2,2'-dimethylpropionic acid hydrazide, N'-(4-methoxyphenylmethylidene)-2,2'-dimethylpropionic acid hydrazide, N'-(4-hydroxyphenylmethylidene)-2,2'-dimethylpropionic acid hydrazide, N'-(1-phenylethylidene)-2,2'-dimethylpropionic acid hydrazide, N'-(1-phenylbenzylidene)-2,2'-dimethylpropionic acid hydrazide, N'-(1-(2,4-dihydroxyphenyl)benzylidene)-2,2'-dimethylpropionic acid hydrazide, N'-(2-furylmethylidene)-2,2'-dimethylpropionic acid hydrazide, N'-(1-methylethylidene)octanoic acid hydrazide, N'-(1-methylpropylidene)octanoic acid hydrazide, N'-(1,3-dimethylbutylidene)octanoic acid hydrazide, N'-(benzylidene)octanoic acid hydrazide, N'-(4-dimethylaminophenylmethylidene)octanoic acid hydrazide, N'-(4-methoxyphenylmethylidene)octanoic acid hydrazide, N'-(4-hydroxyphenylmethylidene)octanoic acid hydrazide, N'-(1-phenylethylidene)octanoic acid hydrazide, N'-(1-phenylbenzylidene)octanoic acid hydrazide, N'-(1-(2,4-dihydroxyphenyl)benzylidene)octanoic acid hydrazide, N'-(2-furylmethylidene)octanoic acid hydrazide, N'-(1-methylethylidene)stearic acid hydrazide, N'-(1-methylpropylidene)stearic acid hydrazide, N'-(1,3-dimethylbutylidene)stearic c acid hydrazide, N'-(benzylidene)stearic acid hydrazide, N'-(4-dimethylaminophenylmethylidene)stearic acid hydrazide, N'-(4-methoxyphenylmethylidene)stearic acid hydrazide, N'-(4-hydroxyphenylmethylidene)stearic acid hydrazide, N-(1-phenylethylidene)stearic acid hydrazide, N'-(1-phenylbenzylidene)stearic acid hydrazide, N'-(1-(2,4-dihydroxyphenyl)benzylidene)stearic acid hydrazide, N'-(2-furylmethylidene)stearic acid hydrazide, N'-(1-methylethylidene)salicylic acid hydrazide, N'-(1-methylpropylidene)salicylic acid hydrazide, N'-(1,3-dimethylbutylidene)salicylic c acid hydrazide, N'-(2-furylmethylidene)salicylic acid hydrazide, 3-hydroxy-N'-(1-methylethylidene)-2-naphthoic acid hydrazide, 3-hydroxy-N'-(1-methylpropylidene)-2-naphthoic acid hydrazide, 3-hydroxy-N'-(1,3-dimethylbutylidene)-2-naphthoic acid hydrazide and 3-hydroxy-N'-(2-furylmethylidene)-2-naphthoic acid hydrazide.

Considering the ability to enhance the gripping performance and the raw material cost, preferred among the above hydrazide derivatives are N'-(diphenylmethylidene)benzoic acid hydrazide, N'-(1-methylethylidene)benzoic acid hydrazide, N'-(1-methylpropylidene)benzoic acid hydrazide, N'-(1,3-dimethylbutylidene)benzoic acid hydrazide, N'-(benzylidene)benzoic acid hydrazide, N'-(1-phenylethylidene)benzoic acid hydrazide, N'-(1-phenylbenzylidene)benzoic acid hydrazide and N'-(2-furylmethylidene)benzoic acid hydrazide.

The above hydrazide derivatives can readily be produced by reacting carboxylic acid hydrazides with corresponding aldehydes or ketones.

In the present invention, the hydrazide derivatives described above may be used alone or in combination of two or more kinds thereof.

A blending amount of (B) the nitrogen-containing compound comprising at least one selected from the benzimidazole derivatives represented by Formula (I) and the hydrazide derivatives represented by Formula (II) is selected in a range of 0.1 to 50 parts by weight per 100 parts by weight of the rubber composition described above. The desired effects are exhibited more in the above amount falling in a range of 0.1 to 50 parts by weight, and an adverse effect is prevented from being exerted on the physical properties after vulcanization by controlling the above amount to 50 parts by weight or less. Because of the reasons described above, the preferred blending amount thereof falls in a range of 0.5 to 30 parts by weight, particularly 1 to 20 parts by weight.

The rubber composition of the present invention is prepared by blending (C) the protonic acid. Capable of being given as the above protonic acid is, for example, at least one selected from aliphatic mono- or _ polycarboxylic acids having 2 to 20 carbon atoms, aromatic mono- or polycarboxylic acids having 7 to 20 carbon atoms, acid anhydrides thereof and phenol derivatives.

The aliphatic mono- or polycarboxylic acid having 2 to 20 carbon atoms described above may be either saturated or unsaturated, and the examples thereof include acetic acid, propionic acid, succinic acid, oleic acid, rodinic acid and maleic acid. The examples of the aromatic mono- or polycarboxylic acid having 7 to 20 carbon atoms include benzoic acid, p-methoxybenzoic acid, p-chlorobenzoic acid, p-nitrobenzoic acid, cinnamic acid, phthalic acid, trimellitic acid, pyromellitic acid and naphthoic acid. Further, the examples of the acid anhydrides of the above carboxylic acids include succinic anhydride, maleic anhydride, phthalic anhydride, trimellitic anhydride and pyromellitic anhydride.

On the other hand, the phenol derivative means nucleus-substituted phenol and has preferably a molecular weight of 2000 or less, and it is particularly preferably a bisphenol compound. To be specific, 1,1-bis(4-hydroxyphenyl)cyclohexane and 4,4'-butylidenebis(3-methyl-6-tert-butylphenol) can preferably be given.

In the present invention, the protonic acid described above may be used alone or in combination of two or more kinds thereof. A blending amount thereof is selected in a range of 0.1 to 50 parts by weight per 100 parts by weight of the rubber composition described above. The desired effects are exhibited more in the amount of 0.1 to 50 parts by weight, and an adverse effect is prevented from being exerted on the other physical properties if it is 50 parts by weight or less. Because of the reasons described above, the preferred blending amount thereof falls in a range of 0.5 to 30 parts by weight, particularly 1 to 20 parts by weight.

In the rubber composition of the present invention, (D) a reinforcing filler can further be used. This reinforcing filler includes compounds which have so far been publicly known, for example, carbon black, silica, alumina, aluminum hydroxide, calcium carbonate and titanium oxide, and they may be used alone or in combination of two or more kinds thereof. Among them, carbon black is particularly suited. The above carbon black shall not specifically be restricted, and optional ones selected from those which have so far ordinarily been used as a reinforcing filler for rubber can be used.

The above carbon black includes, for example, FEF, SRF, HAF, ISAF and SAF. Preferred is carbon black having an iodine absorption number (IA) of 60 mg/g or more and dibutyl phthalate absorption (DBP) of 80 ml/100 g or more. Use of the above carbon black increases an effect for improving various physical properties, and HAF, ISAF and SAF which are excellent in an abrasion resistance are preferred.

A blending amount of the above reinforcing filler is preferably 20 to 120 parts by weight per 100 parts by weight of the rubber composition described above. When a blending amount of the reinforcing filler is 20 parts by weight or more per 100 parts by weight of the rubber composition described above, the reinforcing property and an effect for improving the other physical properties are sufficiently exhibited, and when it is 120 parts by weight or less, the particularly good processability is provided. Considering the reinforcing property, the other physical properties and the processability, the blending amount thereof falls particularly preferably in a range of 30 to 100 parts by weight.

The rubber composition of the present invention can be blended, if necessary, with various chemicals usually used in the rubber industry, for example, a vulcanizing agent, a vulcanization-accelerator, a process oil, an antioxidant, an antiozonant, a silane coupling agent, a scorch preventive, zinc white and stearic acid as long as the object of the present invention is not damaged.

The vulcanizing agent described above includes sulfur, and a use amount thereof is preferably 0.1 to 10.0 parts by weight, more preferably 1.0 to 5.0 parts by weight in terms of a sulfur content per 100 parts by weight of the rubber component described above. If it is 0.1 part by weight or more, the vulcanized rubber can sufficiently obtain a fracture strength, an abrasion resistance and a low heat-generating property, and if it is 10.0 parts by weight or less, it can obtain a satisfactory rubber elasticity.

The vulcanization-accelerator which can be used in the present invention shall not specifically be restricted, and capable of being given are, for example, vulcanization-accelerator of a thiazole base such as M (2-mercaptobenzothiazole), DM (dibenzothiazyl disulfide and CZ (N-cyclohexyl-2-benzothiazylsulfenamide) and a guanidine base such as DPG (diphenylguanidine). A use amount thereof is preferably 0.1 to 5.0 parts by weight, more preferably 0.2 to 3.0 parts by weight per 100 parts by weight of the rubber component described above.

The process oil which can be used in the present invention includes, for example, a paraffin base, a naphthene base and an aromatic base. The aromatic base is used for uses in which the tensile strength and the abrasion resistance are considered important, and the naphthene base or the paraffin base is used for uses in which the hysteresis loss and the low temperature characteristic are considered important. A use amount thereof is preferably 0 to 100 parts by weight per 100 parts by weight of the rubber component described above, and when it is 100 parts by weight or less, the vulcanized rubber can suitably obtain a tensile strength and a low heat-generating property.

The rubber composition of the present invention is obtained by kneading by means of a kneading machine such as an open roll, a Banbury mixer, a kneader and an international mixer (a closed type kneading machine) such as an extruder, and vulcanization is carried out after mold-processing to obtain a rubber article. The rubber composition of the present invention ca be used for tire use such as a tire tread, an under tread, a carcass, a side wall and a bead part, and in addition thereto, it can be used as well for uses such as rubber cushions, belts, hoses and other industrial products. In particular, it is suitably used as rubber for a tire tread.

The pneumatic tire of the present invention is produced by a conventional method using the rubber composition of the present invention. That is, the rubber composition of the present invention blended, if necessary, with various chemicals as described above is extrusion-molded into, for example, a member for a tread at a non-vulcanized stage, and it is mount-molded on a tire molding machine by a conventional method, whereby a green tire is molded. This green tire is heated and pressed in a vulcanizing machine to obtain a tire.

In the above pneumatic tire, gas filled into the tire includes air and inert gas such as nitrogen.

The pneumatic tire in which the rubber composition of the present invention is used for a tread is excellent particularly in a gripping performance.

Next, the present invention shall be explained in further details with reference to examples, but the present invention shall by no means be restricted by these examples.

A Mooney scorch time of the composition and a tan δ value of the vulcanized matter were measured by methods shown below.

### (1) Mooney scorch time (ML₁₊₄) of the composition

The Mooney scorch time (ML₁₊₄) at 130°C was measured according to JIS K6300-1994 and shown by an index, wherein the value of a control was set at 100. It is shown that the larger the numerical value, the longer the Mooney scorch time and the better the productivity.

### (2) tan δ of the vulcanized rubber composition

A viscoelasticity-measuring tester manufactured by Ueshima Mfg. Co., Ltd. was used to measure the tan δ value at 50°C on the condition of a dynamic distortion of 1 %, and it was shown by an index, wherein the value of a control was set at 100. It is shown that the larger the numerical value, the larger the tan δ value and the better the gripping performance of the tire obtained.

### Comparative Example 1

A styrene-butadiene copolymer rubber 100 parts by weight was blended with 80 parts by weight of an aromatic oil, 80 parts by weight of SAF carbon black, 1.5 part by weight of zinc white, 2 parts by weight of stearic acid, 1.5 part by weight of an antioxidant 6C [N-(1,3-dimethylbutyl)-N'-phenyl-p-phenylenediaminel, 1.5 part by weight of a paraffin wax and 5 parts by weight of 1,1-bis(4-hydroxyphenyl)cyclohexane to prepare a master batch. Further, it was blended with 1.5 part by weight of zinc white, 1.5 part by weight of a vulcanization-accelerator DM (mercaptobenzothiazyl sulfide), 2.5 parts by weight of a vulcanization-accelerator CZ (N-cyclohexyl-2-benzothiazylsulfenamide) and 1.5 part by weight of sulfur to prepare a rubber composition.

Then, the above composition was vulcanized on the conditions of 160°C and 20 minutes to obtain a vulcanized rubber.

A Mooney scorch time of the non-vulcanized rubber composition and a tan 6 value of the vulcanized rubber were measured and set as a control.

### Examples 1 to 2 and Comparative Examples 2 to 5

The same procedure as in Comparative Example 1 was carried out, except that in preparing the master batch in Comparative Example 1, 5 parts by weight of imidazole base compounds of kinds shown in Table 1 was further blended. The results thereof are shown in Table 1.

**Table 1**

| | Kind of added compound | Mooney scorch time (ML₁₊₄) | tan δ (50°C) |
|---|---|---|---|
| Comparative Example 1 | - | 100 | 100 |
| Comparative Example 2 | A | 30 | 118 |
| Example 1 | B | 86 | 126 |
| Example 2 | C | 80 | 122 |
| Comparative Examples 3 | D | 68 | 119 |
| Comparative example 4 | E | 66 | 123 |
| Comparative Example 5 | F | 65 | 121 |

(The Mooney scorch time and tan are index values, wherein those of Comparative Example 1 are set at 100)

Remark:
A: 1-benzyl-2-methylimidazole
B: 1-phenylbenzimidazole
C: 1-phenyl-2-methylbenzimidazole
D: 1-benzyl-2-methylbenzimidazole
E: 1-benzylbenzimidazole
F: 1,2-dimethylbenzimidazole

### Comparative Example 6

A styrene-butadiene copolymer rubber 100 parts by weight was blended with 80 parts by weight of an aromatic oil, 80 parts by weight of SAF carbon black, 1.5 part by weight of zinc white, 2 parts by weight of stearic acid, 1.5 part by weight of the antioxidant 6C (described above), 1.5 part by weight of a paraffin wax and 5 parts by weight of 1-phenylbenzimidazole to prepare a master batch. Further, it was blended with 1.5 part by weight of zinc white, 1.5 part by weight of the vulcanization-accelerator DM (described above), 2.5 parts by weight of the vulcanization-accelerator CZ (described above) and 1.5 part by weight of sulfur to prepare a rubber composition.

Then, the above composition was vulcanized on the conditions of 160°C and 20 minutes to obtain a vulcanized rubber.

A Mooney scorch time of the non-vulcanized rubber composition and a tan δ value of the vulcanized rubber are shown in Table 2.

### Examples 3 to 7

The same procedure as in Comparative Example 6 was carried out, except that in preparing the master batch in Comparative Example 6, 5 parts by weight of protonic acids of kinds shown in Table 2 was further blended. The results thereof are shown in Table 2.

**Table 2**

| | Protonic acid | Mooney scorch time (ML₁₊₄) | tan δ (50°C) |
|---|---|---|---|
| Comparative Example 6 | - | 100 | 100 |
| Example 3 | G | 83 | 121 |
| Example 4 | H | 91 | 120 |
| Example 5 | I | 90 | 120 |
| Example 6 | J | 88 | 118 |
| Example 7 | K | 90 | 122 |

(The Mooney scorch time and tan δ are index values wherein those of Comparative Example 1 are set at 100)

Remark:
G: 4,4'-butylidenebis(3-methyl-6-tert-butylphenol)
H: benzoic acid
I: naphthoic acid
J: rodinic acid
K: 1,1-bis(4-hydroxyphenyl)cyclohexane

### Examples 8 to 12

The same procedure as in Comparative Example 1 was carried out, except that in preparing the master batch in Comparative Example 1, 5 parts by weight of compounds of kinds shown in Table 3 was further blended. The results thereof are shown in Table 3.

**Table 3**

| | Kind of added compound | Mooney scorch time (ML₁₊₄) | tan δ (50°C) |
|---|---|---|---|
| Examples 8 | L | 113 | 124 |
| Example 9 | M | 99 | 121 |
| Example 10 | N | 133 | 119 |
| Example 11 | O | 118 | 119 |
| Example 12 | P | 109 | 118 |

(The Mooney scorch time and tan δ are index values, wherein those of Comparative Example 1 are set at 100)

Remark:
L: N-(diphenylmethylidene)benzoic acid hydrazide
M: N'-(1-phenylbenzylidene)benzoic acid hydrazide
N: N'-(di-o-tolylmethylidene)benzoic acid hydrazide
O: N'-(diphenylmethylidene)-o-methylbenzoic acid hydrazide
P: N'-(diphenylmethylidene)-o-hydroxybenzoic acid hydrazide

### Comparative Example 7

Astyrene-butadiene copolymer rubber 100 parts by weight was blended with 80 parts by weight of an aromatic oil, 80 parts by weight of SAF carbon black, 1.5 part by weight of zinc white, 2 parts by weight of stearic acid, 1.5 part by weight of the antioxidant 6C (described above), 1.5 part by weight of a paraffin wax and 5 parts by weight of N'-(diphenylmethylidene)benzoic acid hydrazide to prepare a master batch. Further, it was blended with 1.5 part by weight of zinc white, 1.5 part by weight of the vulcanization-accelerator DM (described above), 2.5 parts by weight of the vulcanization-accelerator CZ (described above) and 1.5 part by weight of sulfur to prepare a rubber composition. Then, the above composition was vulcanized on the conditions of 160°C and 20 minutes to obtain a vulcanized rubber. A Mooney scorch time of the non-vulcanized rubber composition and a tan value of the vulcanized rubber were measured. The results thereof are shown in Table 4.

### Examples 13 to 17

The same procedure as in Comparative Example 7 was carried out, except that in preparing the master batch in Comparative Example 7, 5 parts by weight of protonic acids of kinds shown in Table 4 was further blended. The results thereof are shown in Table 4.

**Table 4**

| | protonic acid | Mooney scorch time (ML₁₊₄) | tan δ (50°C) |
|---|---|---|---|
| comparative Example 7 | - | 100 | 100 |
| Example 13 | G | 102 | 121 |
| Example 14 | H | 120 | 120 |
| Example 15 | I | 118 | 119 |
| Example 16 | J | 116 | 119 |
| Example 17 | K | 118 | 123 |

(The Mooney scorch time and tan δ are index values, wherein those of Comparative Example 4 are set at 100)

### INDUSTRIAL APPLICABILITY

According to the present invention, a rubber component is blended with a combination of a nitrogen-containing compound comprising at least one selected from a benzimidazole derivative having a specific structure and a hydrazide derivative having a specific structure with a protonic acid in specific amounts, whereby a tan δ value of the rubber composition (vulcanized composition) in a grip area (the vicinity of 50°C) can be raised without reducing a productivity to a large extent. As a result thereof, a tire prepared by using the rubber composition described above for a tread part provides the excellent effects that a reduction in a tan δ value following a rise in a tire temperature brought about by running is inhibited and that a gripping performance in running at a high speed is improved. Further, use of the suited nitrogen-containing compound and protonic acid described above makes it possible to extend the Mooney scorch time and lead to a rise in the productivity.

## Claims

1. A rubber composition prepared by blending:
(A) 100 parts by weight of a rubber component comprising a natural rubber and/or a synthetic rubber,
(B) 0.1 to 50 parts by weight of a nitrogen-containing compound comprising at least one selected from a benzimidazole derivative represented by Formula (I): 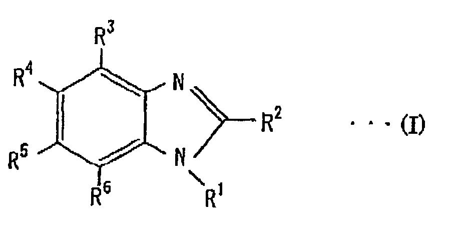 (wherein R¹ is phenyl and R² to R⁶ each represent independently a hydrogen atom, a halogen atom, a hydrocarbon group having 1 to 18 carbon atoms, a heterocyclic group, a hydroxyl group, an alkoxyl group, a substituted or non-substituted amino group, an amide group, a nitro group, a substituted or non-substituted mercapto group, a sulfonyl group or an acyl group) and a hydrazide derivative represented by Formula (II): 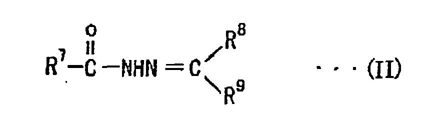 (wherein R⁷ represents a hydrogen atom, a hydrocarbon group having 1 to 18 carbon atoms or an amino group; and R⁸ and R⁹ each represent independently a hydrogen atom, a hydrocarbon group having 1 to 18 carbon atoms or a heterocyclic group, and R⁸ and R⁹ may be the same as or different from each other and may be combined with each other to form a ring structure) and
(C) 0.1 to 50 parts by weight of a protonic acid.

2. The rubber composition as described in claim 1, wherein the protonic acid described above is at least one selected from aliphatic mono- or polycarboxylic acids having 2 to 20 carbon atoms, aromatic mono- or polycarboxylic acids having 7 to 20 carbon atoms, acid anhydrides thereof and phenol derivatives.

3. The rubber composition as described in claim 2, wherein the phenol derivative described above is a bisphenol compound.

4. The rubber composition as described in claim 3, wherein the bisphenol derivative described above is 1,1-bis(4-hydroxyphenyl)cyclohexane or 4,4-butylidenebis(3-methyl-6-tert-butylphenol).

5. The rubber composition as described in any of claims 1 to 4, further blended with (D) 20 to 120 parts by weight of a reinforcing filler.

6. The rubber composition as described in claim 5, wherein the reinforcing filler described above is carbon black.

7. A pneumatic tire **characterized by** using the rubber composition as described in any of claims 1 to 6 for a member.

8. The pneumatic tire as described in claim 7, wherein the member described above is a tread.

## Patentansprüche

1. Kautschukzusammensetzung, die hergestellt wird durch Mischen von:
(A) 100 Gewichtsteilen einer Kautschukkomponente umfassend einen Naturkautschuk und/oder einen Synthesekautschuk,
(B) 0,1 bis 50 Gewichtsteilen einer stickstoffhaltigen Verbindung umfassend mindestens eines ausgewählt unter einem Benzimidasolderivat, das durch die Formel (I): 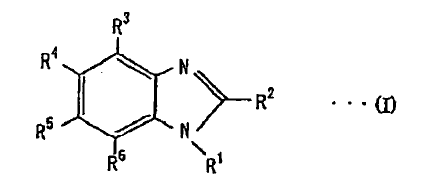 dargestellt ist (wobei R¹ Phenyl ist; und R² bis R⁶ unabhängig jeweils ein Wasserstoffatom, ein Halogenatom, eine Kohlenwasserstoffgruppe, die 1 bis 18 Kohlenstoffatome aufweist, eine heterocyclische Gruppe, eine Hydroxylgruppe, eine Alkoxylgruppe, eine substituierte oder nichtsubstituierte Aminogruppe, eine Amidgruppe, eine Nitrogruppe, eine substituierte oder nichtsubstituierte Mercaptogruppe, eine Sulfonylgruppe oder eine Acylgruppe darstellen) und einem Hydrazidderivate, das durch die Formel (II): 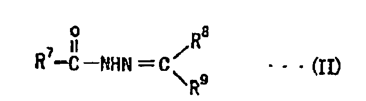 dargestellt ist (wobei R⁷ ein Wasserstoffatom, eine Kohlenwasserstoffgruppe, die 1 bis 18 Kohlenstoffatome aufweist, oder eine Aminogruppe darstellt; und R⁸ und R⁹ unabhängig jeweils ein Wasserstoffatom, eine Kohlenwasserstoffgruppe, die 1 bis 18 Kohlenstoffatome aufweist, oder eine heterocyclische Gruppe darstellen und R⁸ und R⁹ gleich oder von einander verschieden und miteinander kombiniert sein können, um eine Ringstruktur zu bilden) und
(C) 0,1 bis 50 Gewichtsteilen einer Protonsäure.

2. Kautschukzusammensetzung wie in Anspruch 1 beschrieben, wobei die oben beschriebene Protonsäure mindesten eine ist ausgewählt unter aliphatischen Mono- oder Polycarbonsäuren, die 2 bis 20 Kohlenstoffatome aufweisen, aromatischen Mono- oder Polycarbonsäuren, die 7 bis 20 Kohlenstoffatome aufweisen, Säureanhydriden davon und Phenolderivaten.

3. Kautschukzusammensetzung wie in Anspruch 2 beschrieben, wobei das oben beschriebenen Phenolderivat eine Bisphenolverbindung ist.

4. Kautschukzusammensetzung wie in Anspruch 2 beschrieben, wobei das oben beschriebene Bisphenolderivat 1,1-Bis(4-hydroxyphenyl)cyclohexan oder 4,4'-Butylidenbis(3-methyl-6-tert.-butylphenol) ist.

5. Kautschukzusammensetzung wie in einem der Ansprüche 1 bis 4 beschrieben, des Weiteren mit (D) 20 bis 120 Gewichtsteilen eines verstärkenden Füllstoffs gemischt.

6. Kautschukzusammensetzung wie in Anspruch 5 beschrieben, wobei der oben beschriebene verstärkende Füllstoff Ruß ist.

7. Luftreifen, **gekennzeichnet durch** Verwenden der Kautschukzusammensetzung wie in einem der Ansprüche 1 bis 6 beschrieben, für ein Teil.

8. Luftreifen wie in Anspruch 7 beschrieben, wobei das oben beschriebene Teil ein Profil ist.

## Revendications

1. Composition de caoutchouc préparée en mélangeant:
(A) 100 parties en poids d'un constituant caoutchouc comprenant un caoutchouc naturel et/ou un caoutchouc synthétique,
(B) 0,1 à 50 parties en poids d'un composé contenant de l'azote comprenant au moins l'un choisi parmi un dérivé de benzimidazole représenté par la formule (I): 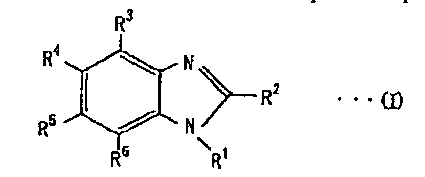 (dans laquelle R¹ est un phényle; et R² à R⁶ représentent chacun indépendamment un atome d'hydrogène, un atome d'halogène, un groupe hydrocarboné ayant 1 à 18 atomes de carbone, un groupe hétérocyclique, un groupe hydroxyle, un groupe alcoxyle, un groupe amino substitué ou non substitué, un groupe amide, un groupe nitro, un groupe mercapto substitué ou non substitué, un groupe sulfonyle ou un groupe acyle), et un dérivé d'hydrazide représenté par la formule (II): 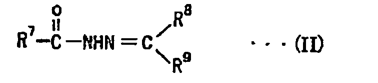 (dans laquelle R⁷ représente un atome d'hydrogène, un groupe hydrocarboné ayant 1 à 18 atomes de carbone ou un groupe amino; et R⁸ et R⁹ représentent chacun indépendamment un atome d'hydrogène, un groupe hydrocarboné ayant 1 à 18 atomes de carbone ou un groupe hétérocyclique, et R⁸ et R⁹ peuvent être identiques ou différents entre eux et peuvent être combinés l'un avec l'autre pour former une structure cyclique) et
(C) 0,1 à 50 parties en poids d'un acide protonique.

2. Composition de caoutchouc selon la revendication 1, dans laquelle l'acide protonique décrit ci-dessus est au moins un acide choisi parmi les acides mono- ou polycarboxyliques aliphatiques ayant 2 à 20 atomes de carbone, les acides mono- ou polycarboxyliques aromatiques ayant 7 à 20 atomes de carbone, les anhydrides d'acide de ceux-ci et les dérivés phénoliques.

3. Composition de caoutchouc selon la revendication 2, dans laquelle le dérivé phénolique décrit ci-dessus est un composé de bisphénol.

4. Composition de caoutchouc selon la revendication 2, dans laquelle le dérivé de bisphénol décrit ci-dessus est le 1,1-bis(4-hydroxyphényl)cyclohexane ou le 4,4'-butylidènebis(3-méthyl-6-tert-butylphénol).

5. Composition de caoutchouc selon l'une quelconque des revendications 1 à 4, mélangée en outre avec (D) 20 à 120 parties en poids d'une charge renforçante.

6. Composition de caoutchouc selon la revendication 5, dans laquelle la charge renforçante décrite ci-dessus est le noir de carbone.

7. Pneumatique **caractérisé par** l'utilisation de la composition de caoutchouc selon l'une quelconque des revendications 1 à 6 pour un constituant.

8. Pneumatique selon la revendication 7, dans lequel le constituant décrit ci-dessus est une bande de roulement.
